# NEUE EUROPÄISCHE PATENTSCHRIFT

(11) **EP 1 204 958 B2**
(45) Veröffentlichungstag und Bekanntmachung des Hinweises auf die Entscheidung über den Einspruch: **07.03.2007**
(45) Hinweis auf die Patenterteilung: 01.10.2003
(21) Anmeldenummer: 00958141.4
(22) Anmeldetag: 18.07.2000
(51) Int. Cl.: G08G 1/0968

(54) **NAVIGATIONSVERFAHREN UND NAVIGATIONSSYSTEM FÜR KRAFTFAHRZEUGE**
NAVIGATION METHOD AND NAVIGATION SYSTEM FOR MOTOR VEHICLES
PROCEDE ET SYSTEME DE NAVIGATION POUR VEHICULES AUTOMOBILES

(30) Priorität: 24.07.1999 DE 19934862
(43) Veröffentlichungstag der Anmeldung: 15.05.2002
(73) Patentinhaber: ROBERT BOSCH GMBH, 70442 Stuttgart (DE)
(72) Erfinder: RYCHLAK, Stefan, D-31241 Ilsede (DE)
(86) Internationale Anmeldenummer: PCT/DE2000/002320
(87) Internationale Veröffentlichungsnummer: WO 2001/008120

(56) Entgegenhaltungen:
- EP-A- 0 703 432
- US-A- 5 334 974
- US-A- 5 570 100
- US-A- 5 867 110

## Beschreibung

### Technisches Gebiet

Die Erfindung betrifft ein Navigationsverfahren und ein Navigationssystem für Kraftfahrzeuge zur Navigation von einem momentanen Standort zu einem Zielort, gemäß dem jeweiligen Oberbegriff der Ansprüche 1 und 10.

### Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher von einem aktuellen Standort zu einem gewünschten Zielort, ohne daß der Führer des Fortbewegungsmittels vorher aufwendig eine Route planen und entsprechendes Kartenmaterial erwerben muss. Hierzu liegen entsprechende, beispielsweise auf Karten, Landkarten oder Straßenkarten basierende, Navigationsdaten in dem Navigationssystem beispielsweise auf CD-ROM gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei vorzugsweise Daten über Straßen und Wege für Kraftfahrzeuge.

Bevor jedoch das Navigationssystem seine Aufgabe übernehmen und eine Route vom Standort zum Zielort berechnen kann, ist es notwendig, daß ein Benutzer den gewünschten Zielort und ggf. bei Navigationsgeräten ohne GPS auch den aktuellen Standort eingibt. Dies erfolgt beispielsweise über ein manuell zu betätigendes Eingabegerät, wobei Buchstaben einer Zeichentabelle aufeinanderfolgend aufgerufen bzw. gescrollt und ausgewählt werden, bis die ausgewählten Buchstaben und Ziffern beispielsweise einen Ortsnamen, einen Straßennamen und eine Hausnummer eines Zielortes bzw. Standortes bilden. Dies ist jedoch umständlich sowie zeitraubend und erfordert gewisse Grundkenntnisse bei der Bedienung des Navigationssystems. Außerdem benötigen diese Eingaben eine gewisse Zeit, was vor allem dann besonders nachteilig ist, wenn ein Benutzer in einem ihm nicht bekannten Gebiet in einer Notfallsituation schnell beispielsweise ein Krankenhaus oder eine Polizeistation erreichen muss. Durch das erst mühsame ermitteln eines Standortes des beispielsweise nächstgelegenen Krankenhauses und die Programmierung des Navigationssystems zum Berechnen einer Route zu diesem nächstgelegenen Krankenhaus verstreicht wertvolle Zeit. Ferner ist häufig zu beobachten, daß Beteiligten von Notfallsituationen unter entsprechendem Stress häufig nicht einmal mehr die allgemein bekannte medizinische Notrufnummer 112 oder 19222 präsent ist, so daß zügige und korrekte Eingaben am Navigationssystem erst recht nicht mehr ausgeführt werden können. Auch der einem Beteiligten in vertrauter Umgebung üblicherweise gut bekannte Weg beispielsweise zum nächsten Krankenhaus ist in derartigen Ausnahmesituationen oftmals nicht mehr ohne weiteres aus dem Gedächtnis abrufbar.

Das Dokument US 5 867 110 beschreibt ein Navigationssystem zur Berechnung und Anzeige der Route zu einem Schutzraum.

### Darstellung der Erfindung, Aufgabe, Lösung, Vorteile

Es ist Aufgabe der vorliegenden Erfindung, ein verbessertes Verfahren und eine verbesserte Vorrichtung der obengenannten Art zur Verfügung zu stellen, welche die obengenannten Nachteile beseitigen und einen Benutzer auch in Notfallsituationen unter erhöhtem Stress optimal unterstützt.

Diese Aufgabe wird durch eine Navigationsverfahren der o.g. Art mit den Merkmalen des unabhängigen Verfahrensanspruchs und durch ein Navigationssystem der o.g. Art mit den Merkmalen des unabhängigen Sachanspruchs gelöst.

Dies hat den Vorteil, daß in einem Notfall ohne zeitaufwendige Eingaben oder Programmierungen das Navigationssystem eine wertvolle Hilfe zum Leiten zum nächsten Notfallziel, wie beispielsweise einem Krankenhaus, einer Feuerwehrstation oder einer Polizeistation, bietet. Die Funktionalität eines Navigationssystems ist somit um eine wichtige zusätzliche Routenauswahl erweitert.

Vorzugsweise Weitergestaltungen des Navigationsverfahrens sind in den abhängigen Verfahrensansprüchen beschrieben.

Erfindungsgemäß werden auf die Benutzeranforderung hin verschiedenartige Notfallziele zur Auswahl durch den Benutzer angeboten, wobei die Notfallziele beispielsweise Krankenhäuser, Polizeistationen, öffentliche Fernsprechapparate, Personenschutzanlagen, Notrufsäulen und/oder Feuerwehrstationen sind.

Die Notfall-Benutzeranforderung erfolgt beispielsweise durch Betätigen einer Taste für eine vorbestimmte Zeit von beispielsweise drei Sekunden.

Eine vorteilhafte Weiterbildung der Erfindung richtet sich darauf, daß nach Auswahl eines Notfallziels zu dem die Route berechnet wird, vorzugsweise automatisch das Notfallziel über die Ankunft des Fahrzeugs in Kenntnis gesetzt wird. Dies ermöglicht seitens des Notfallziels eine rechtzeitige Vorbereitung auf das Eintreffen des betroffenen Fahrzeugs und die damit verbundenen erforderlichen Maßnahmen. Insbesondere kann beispielsweise eine Notaufnahme eines Krankenhauses als ausgewähltem Notfallziel frühzeitig auf das Eintreffen eines Unfallopfers oder eines Patienten vorbereitet werden.

Weiter ist es von Vorteil, wenn seitens des angewählten Notfallziels dem Führer des nahenden Fahrzeugs eine Auswahl möglicher oder wahrscheinlicher Diagnosen angeboten wird, aus denen der Fahrzeugführer die ihm zutreffendste auswählen kann, welche dann dem Notfallziel mitgeteilt wird. Dies ermöglicht eine weitere Verbesserung der Vorbereitung des Notfallziels auf das eintreffende Fahrzeug und eine schnellere und zielgerichtetere Behandlung bzw. Versorgung des Fahrzeugführers oder Fahrzeuginsassen.

Ferner ist bei einem Navigationssystem der o. g. Art erfindungsgemäß ein Speicher mit einer Datenbasis für Notfallziele und eine Einrichtung zum Bestimmen eines dem momentanen Standort nächstgelegenen Notfallzieles aus der Datenbasis vorgesehen.

Eine weitere vorteilhafte Weiterbildung der Erfindung richtet sich darauf, daß über eine Kommunikationsschnittstelle eine Kommunikationsverbindung zu einer extern angeordneten Datenbasis, beispielsweise in Form eines Servicecenters, hergestellt wird, und das ausgewählte Notfallziel oder die Menge der zur Auswahl angebotenen Notfallziele über die Kommunikationsverbindung dem Navigationssystem zugeführt werden. Dies hat den Vorteil, daß stets aktuelle, nämlich beispielsweise durch das Servicecenter gepflegte, Informationen über Notfallziele zur Verfügung stehen. Weiterhin können außerhalb üblicher Öffnungszeiten, beispielsweise nachts, am Wochenende oder Feiertagen, nur solche Notfallziele angeboten werden, an denen auch tatsächlich ein Notdienst vorhanden ist, im Falle eines medizinischen Notfalldienstes beispielsweise die nächstgelegene Arztpraxis mit Wochenendnotdienst.

Vorteilhafte Weiterbildungen des Navigationssystems sind in den abhängigen Sachansprüchen beschrieben.

So erreicht man eine einfache Bedienbarkeit dadurch, daß eine manuell betätigbare Taste zum Aktivieren der Einrichtung zum Bestimmen eines dem momentanen Standort nächstgelegenen Notfallzieles vorgesehen ist. Hierdurch ist die Einrichtung zum Bestimmen eines dem momentanen Standort nächstgelegenen Notfallzieles direkt und einfach aktivierbar.

### Kurze Beschreibung der Zeichnungen

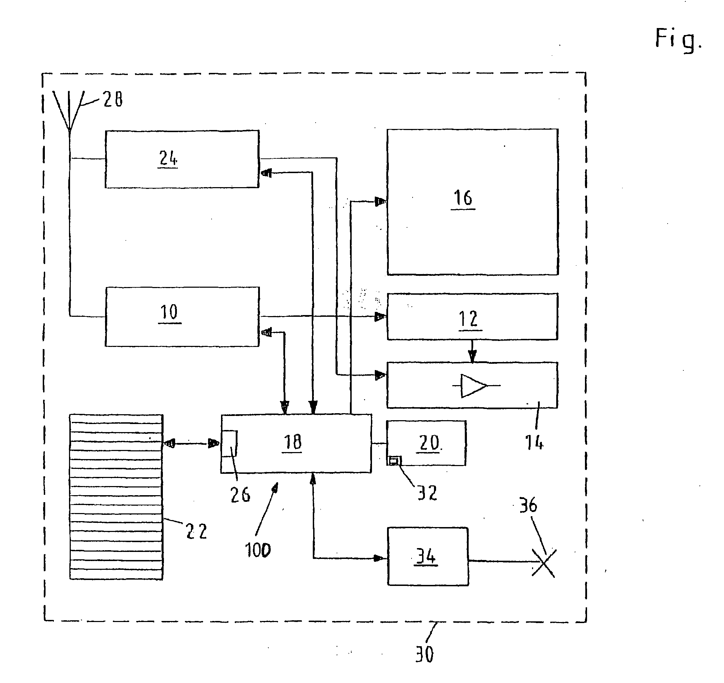

Nachstehend wird die Erfindung anhand der beigefügten Zeichnung näher erläutert. Diese zeigt in der einzigen Fig. eine schematisches Blockschaltbild einer bevorzugten Ausführungsform eines erfindungsgemäßen Navigationssystems.

### Bester Weg zur Ausführung der Erfindung

Die in der einzigen Fig. dargestellte bevorzugte Ausführungsform eines erfindungsgemäßen Navigationssystems 100 umfasst eine Zielführungseinrichtung 10 mit akustischer Straßenführung 12 über Lautsprechereinheit 14, eine Anzeigeeinrichtung 16 für beispielsweise "Zielort: Stadt, Straße", einen Mikroprozessor 18 mit Benutzerschnittstelle in Form einer Tastatur 20, einen Speicher 22 für Notfallziele, ein Rundfunkempfangsgerät 24, welches ebenfalls mit der Lautsprechereinheit 14 verbunden ist, und eine mit dem Rundfunkempfänger 24 sowie der Zielführungseinrichtung 10 verbundene Antenne 28. Die vorgenannten Komponenten befinden sich in bzw. an einem mit 30 bezeichneten Kraftfahrzeug, welches lediglich mit gestrichelten Linien angedeutet ist.

In dem Speicher 22 ist eine Datenbasis von Notfallzielen innerhalb einer digitalen Kartenbasis des Navigationssystems, welches ein reales Straßennetz abbildet, gespeichert. Derartige Notfallziele sind beispielsweise Krankenhäuser, Polizeistationen, öffentliche Fernsprechapparate, Notrufsäulen und/oder Feuerwehrwachen. In den Mikroprozessor 18 integriert, beispielsweise in Form eines Softwaremoduls, ist eine Einrichtung 26 zum Bestimmen eines dem momentanen Standort nächstgelegenen Notfallzieles aus der Datenbasis im Speicher 22. In die Tastatur 20 ist eine Notfalltaste 32 integriert, welche bei Betätigung die Einrichtung 26 aktiviert. Diese Notfalltaste 32 ist in entsprechender Weise auf der Tastatur 20 beschriftet.

Durch manuelles Bedienen der Tastatur 20 erfolgen entsprechende Benutzeranforderungen durch einen Benutzer. Der Ausdruck "Benutzeranforderung" bedeutet hier eine Eingabe eines Benutzers, wie beispielsweise ein Druck auf eine Taste des Navigationssystems 100, wobei diese Eingabe eine vorbestimmte Aktion des Navigationssystems 100 aktivieren soll. Eine für einen Notfall, wie beispielsweise einen medizinischen Notfall, durchgeführte Benutzeranforderung wird nachfolgend als "Notfall-Benutzeranforderung" bezeichnet. Diese Notfall-Benutzeranforderung erfolgt durch manuelles Betätigen der Notfalltaste 32.

Kommt der Benutzer des Kraftfahrzeuges 30 in eine Notfallsituation, in der beispielsweise ein rasches Anfahren des nächstgelegenen Krankenhauses erforderlich wird, so betätigt er die Notfalltaste 32 zum erzeugen der "Notfall-Benutzeranforderung". Daraufhin erscheint in der Anzeigeeinrichtung 16 ein Auswahlmenü beispielsweise in folgender Form:

### Notfallziele:

- nächstes Krankenhaus
- nächste Polizei
- nächste Feuerwehr
- nächste Tierklinik

Der Benutzer wählt "nächstes Krankenhaus" aus, woraufhin die Einrichtung 26 aus dem Speicher 22 dasjenige Krankenhaus heraussucht, welches dem momentanen Standort am nächsten liegt. Der Ort dieses nächstgelegenen Krankenhauses wird als Zielort bestimmt und eine Route vom momentanen Standort zum Zielort berechnet. Anschließend steht über die Anzeigeeinrichtung 16 und akustische Ansage 12 eine Routenführung durch die Zielführungseinrichtung 10 zu diesem nächstgelegenen Krankenhaus zur Verfügung.

Der Benutzer muss hierbei in keiner Weise erst mühsam selbst das nächstgelegene Krankenhaus beispielsweise mittels einer Karte suchen und dessen Standort als Zielort manuell eingeben. Dies wird alles automatisch vom Navigationssystem 100 erledigt.

Gemäß einer vorteilhaften Weiterbildung der Erfindung ist an den Mikroprozessor 18 eine Kommunikationsschnittstelle 34, im vorliegenden Fall in Form eines nach dem GSM-, dem UMTS- oder einem vergleichbaren Standard funktionierenden Mobilfunktelefons, angeschlossen. Diese verfügt über eine Sende- und Empfangsantenne 36 zum Senden und/oder Empfangen von Mobilfunksignalen. Weiter sind gemäß der Weiterbildung im Speicher 22 zusätzlich zu den Notfallzielen Adressen, insbesondere Telefonnummern, angegeben, unter denen die Notfallziele erreichbar sind.

Gemäß der Weiterbildung wird nach Auswahl eines Notfallziels durch den Fahrzeugführer aus der im Speicher 22 abgelegten Datenbasis eine Telefonnummer des ausgewählten Notfallziels ausgelesen und der Kommunikationsschnittstelle 34 zugeführt, die nach Maßgabe der Telefonnummer eine Kommunikationsverbindung zum ausgewählten Notfallziel herstellt. Nach Herstellung der Kommunikationsverbindung zwischen Fahrzeug und Notfallziel wird das Notfallziel über die Ankunft des Fahrzeugs informiert. Diese Information kann allein darin bestehen, daß dem Notfallziel die bevorstehende Ankunft des Fahrzeugs überhaupt mitgeteilt wird. Vorteilhafterweise wird darüber hinaus dem ausgewählten Notfallziel auch die voraussichtlichen Ankunftszeit des Fahrzeugs am Notfallziel mitgeteilt.

Diese wird beispielsweise aus den im Speicher 22 abgelegten Verkehrswegedaten, die Wegeabschnitten zugeordnete Durchschnittsgeschwindigkeitswerte umfassen, unter Zugrundelegen des aktuellen Fahrzeugstandorts und der zum Notfallziel berechneten Route bestimmt.

Weiter ist es gemäß der Weiterbildung vorgesehen, daß das Notfallziel über die bestehende Kommunikationsverbindung dem Fahrzeugführer eine Auswahl an wahrscheinlichen, im Falle beispielsweise eines Krankenhauses als ausgewähltem Notfallziel medizinischen, Diagnosen mitteilt. Die Auswahl wahrscheinlicher Diagnosen ist ähnlich der Auswahl an Notfallzielen auf der Anzeigeeinrichtung 16 darstellbar, so daß der Fahrzeugführer aus der Auswahl der angebotenen Diagnosen die aus seiner Sicht zutreffendste auswählen kann, die darauf dem ausgewählten Notfallziel über die Kommunikationsverbindung mitgeteilt wird.

Weiterhin kann es ergänzend oder alternativ auch vorgesehen sein, daß seitens des Notfallziels eine Diagnose, beispielsweise durch einen diensthabenden Arzt eines Krankenhauses als ausgewähltem Notfallziel, fernmündlich im Dialog mit dem Fahrzeugführer über die bestehende Kommunikationsverbindung abgefragt wird. Zur akustischen Wiedergabe der vom ausgewählten Notfallziel über die Kommunikationsschnittstelle 34 empfangenen Sprachsignale dient dabei vorzugsweise der Lautsprecher 14 des Navigationsgeräts.

Alternativ kann auch beispielsweise von einer Kraftfahrzeugwerkstatt als ausgewähltem Notfallziel automatisch eine Ferndiagnose des Fahrzeugs oder wesentlicher Komponenten des Fahrzeugs über die Kommunikationsverbindung dergestalt erfolgen, daß hierfür wesentliche Fahrzeugdaten, wie Kühlmitteltemperatur, Ölfüllstandsanzeige, Treibstoffvorrat usw., die in einem sogenannten, mit der erfindungsgemäßen Navigationsvorrichtung in Verbindung stehenden, Bordcomputer zur Verfügung stehen, automatisch oder durch notfallzielseitiges Fachpersonal abgefragt werden.

Eine weitere Fortbildung der Erfindung richtet sich auf eine externe Datenbasis, aus der ein ausgewähltes Notfallziel oder mehrere zur Auswahl angebotene Notfallziele in das Navigationssystem geladen werden. Dazu verfügt das Navigationssystem über die beschriebene Kommunikationsschnittstelle 34, die zur Herstellung einer Kommunikationsverbindung zur externen Datenbasis ausgebildet ist.

Hierzu ist im Navigationssystem mindestens eine Adresse, vorzugsweise eineTelefonnummer, eines Servicecenters, das die externe Datenbasis verwaltet und den darin enthaltenen Datenbestand pflegt, gespeichert.

Im Falle einer Notfallbenutzeranforderung stellt die Kommunikationsschnittstelle 34 nach Maßgabe der im Navigationssystem gespeicherten Adresse eine Kommunikationsverbindung zum Servicecenter her, worauf aus desses Datenbasis ein Notfallziel, oder gemäß einer bevorzugten Ausführungsform eine Mehrzahl auswählbarer Notfallziele, geladen wird oder werden. Vorzugsweise werden dazu Fahrzeugpositionsdaten vom Navigationssystem an das Servicecenter übertragen, das das oder die Mehrzahl von Notfallzielen im Umkreis des Fahrzeugstandorts ermittelt und dieses oder diese dem Navigationssytem zur Verfügung stellt.

Die Pflege der Notfallziele seitens des Servicecenters umfaßt eine ständige Aktualisierung der Notfallzieldaten, insbesondere von Informationen über deren Verfügbarkeit. So stellt das Servicecenter beispielsweise Daten über Öffnungszeiten der Notfallziele und über auch außerhalb der Öffnungszeiten verfügbare Notfalldienste, beispielsweise einen medizinischen Wochendendnotfalldienst, in die Datenbasis ein. Dies ermöglicht die Auswahl nur solcher Notfallziele, die zum Zeitpunkt der Notfallbenutzeranforderung, oder, gemäß einer vorteilhaften Weiterbildung der Erfindung, spätestens zum voraussichtlichen Zeitpunkt des Eintreffens der Fahrzeugs am Notfallziel, auch tatsächlich verfügbar sind. So werden auf eine Notfallbenutzeranforderung, beispielsweise für einen medizinischen Notfall am Wochenende, nur an diesem Wochenende tatsächlich für den Notfalldienst eingeteilte Arztpraxen oder Krankenhäuser als Notfallziele ausgewählt.

Das oder die vom Servicecenter zur Verfügung gestellte oder gestellten Notfallziel oder Notfallziele wird oder werden über die bestehende Kommunikationsverbindung in das Navigationssystem 100 geladen und in der beschriebenen Weise weiter verwendet. Die geladenen Notfallzieldaten brauchen dabei vorteilhafterweise lediglich deren Standorte und im Falle der Auswählbarkeit durch den Benutzer eine prägnante Charaktisierung des jeweiligen Notfallziels, wie "Krankenhaus", "Polizei", "Pannenhilfe" oder ähnliches zu umfassen.

## Patentansprüche

1. Navigationsverfahren für Kraftfahrzeuge zur Navigation von einem momentanen Standort zu einem Zielort,
wobei unmittelbar auf eine Notfall-Benutzeranforderung automatisch verschiedene Notfallziel-Arten zur Auswahl durch den Benutzer angeboten werden und wobei unmittelbar nach Auswahl einer Notfallziel-Art durch den Benutzer automatisch ein dem momentanen Standort nächstgelegenes Notfallziel der ausgewählten Art aus einer Datenbasis bestimmt, als Zielort festgelegt und in einem im Fahrzeug betriebenen Navigationssystem eine Route vom momentanen Standort zum Notfallziel berechnet wird, und wobei zur Notfall-Benutzeranforderung eine vorbestimmte Taste betätigt wird.

2. Navigationsverfahren nach Anspruch 1, **dadurch gekennzeichnet, daß** die Notfallziele Krankenhäuser, Polizeistationen, öffentliche Fernsprechapparate, Personenschutzanlagen, Notrufsäulen und/oder Feuerwehrstationen sind.

3. Navigationsverfahren nach einem der vorhergehenden Ansprüche, **dadurch gekennzeichnet, daß** die vorbestimmte Taste zum Aktivieren der Notfall-Benutzeranforderung für eine vorbestimmte Zeit von beispielsweise drei Sekunden betätigt werden muss.

4. Navigationsverfahren nach einem der vorhergehenden Ansprüche, **dadurch gekennzeichnet, daß** über eine Kommunikationsschnittstelle eine Kommunikationsverbindung zum ausgewählten Notfallziel hergestellt wird, über die das Notfallziel über die bevorstehende Ankunft des Fahrzeugs informiert wird.

5. Navigationsverfahren nach Anspruch 4, **dadurch gekennzeichnet, daß** dem Notfallziel eine voraussichtliche Ankunftszeit des Fahrzeugs am Notfallziel mitgeteilt wird.

6. Navigationsverfahren nach Anspruch 4 oder 5, **dadurch gekennzeichnet, daß** vom ausgewählten Notfallziel über die Kommunikationsverbindung eine Diagnose vom Fahrzeug und/oder Fahrzeugführer abgefragt wird.

7. Navigationsverfahren nach einem der vorhergehenden Ansprüche, **dadurch gekennzeichnet, daß** über eine Kommunikationsschnittstelle eine Kommunikationsverbindung zu einer externen Datenbasis hergestellt wird und das Notfallziel aus der externen Datenbasis bestimmt wird.

8. Navigationssystem (100) für Kraftfahrzeuge zur Navigation von einem momentanen Standort zu einem Zielort, wobei eine vorbestimmte Taste (32) zum Auslösen einer Notfall-Benutzeranforderung vorgesehen ist, wobei das Navigationssystem dazu ausgebildet ist, unmittelbar auf eine Notfallbenutzeranforderung dem Benutzer aus einer Datenbasis für Notfallziele verschiedene Notfallziel-Arten zur Auswahlvorzuschlagen und wobei eine Einrichtung (26) des Navigationssystems dazu ausgebildet ist, unmittelbar nach-Auswahl einer Notfallziel-Art durch den Benutzer aus der Datenbasis ein dem momentanen Standort nächstgelegenes Notfallziel der gewählten Notfallziel-Art zu bestimmen und eine Routenberechnung vom momentanen Standort zum gewählten Notfallziel durchzuführen.

9. Navigationssystem (100) nach Anspruch 8, **gekennzeichnet durch** einen Speicher (22), in dem die Datenbasis abgelegt ist.

10. Navigationssystem nach Anspruch 8, **dadurch gekennzeichnet, daß** die Datenbasis in einem externen Speicher abgelegt ist, und daß eine Kommunikationsschnittstelle (34) zur Abfrage eines Notfallziels aus der externen Datenbasis vorgesehen ist.

11. Navigationssystem nach einem der vorhergehenden Ansprüche 8 bis 10, **dadurch gekennzeichnet, daß** die Notfallziele Krankenhäuser, Polizeistationen, öffentliche Fernsprechapparate, Personenschutzanlagen, Notrufsäulen und/oder Feuerwehrstationen sind.

12. Navigationssystem nach einem der vorhergehenden Ansprüche 8 bis 11, **dadurch gekennzeichnet, daß** eine Kommunikationssclinittstelle (34) vorgesehen ist, über die ein ausgewähltes Notfallziel zur Mitteilung einer bevorstehenden Ankunft des Fahrzeugs anwählbar ist.

## Claims

1. Navigation method for motor vehicles for navigating from an instantaneous location to a destination, various types of emergency destination being offered automatically for selection by the user in immediate response to an emergency user request and, immediately after selection of a type of emergency destination by the user, an emergency destination of the selected type which is closest to the instantaneous location automatically being determined from a database, being defined as a destination and a route from the instantaneous location to the emergency location being calculated in a navigation system which is operated in the vehicle, and a predetermined key being activated for the emergency user request.

2. Navigation method according to Claim 1, **characterized in that** the emergency destinations are hospitals, police stations, public telephones, personal protection systems, emergency phone points and/or fire stations.

3. Navigation method according to one of the preceding claims, **characterized in that** the predetermined key for activating the emergency user request has to be activated for a predetermined time of, for example, three seconds.

4. Navigation method according to one of the preceding claims, **characterized in that** a communications link is set up to the selected emergency destination via a communications interface, the emergency destination being informed about the imminent arrival of the vehicle via said link.

5. Navigation method according to Claim 4, **characterized in that** an anticipated arrival time of the vehicle at the emergency destination is communicated to the emergency destination.

6. Navigation method according to Claim 4 or 5, **characterized in that** a diagnosis is interrogated from the vehicle and/or driver of the vehicle by the selected emergency destination via the communications link.

7. Navigation method according to one of the preceding claims, **characterized in that** a communications link to an external database is set up via a communications interface and the emergency destination is determined from the external data base.

8. Navigation system (100) for motor vehicles for navigating from an instantaneous location to a destination, a predetermined key (32) for initiating an emergency user request being provided, the navigation system being designed to suggest to the user, in immediate response to an emergency user request, various types of emergency destination from a database for emergency destinations for selection, and a device (26) in the navigation system being designed to determine from the database, immediately after selection of a type of emergency destination by the user, an emergency destination of the selected type of emergency destination which is closest to the instantaneous location and to calculate a route from the instantaneous location to the selected emergency destination.

9. Navigation system (100) according to Claim 8, **characterized by** a memory (22) in which the database is stored.

10. Navigation system according to Claim 8, **characterized in that** the database is stored in an external memory, and **in that** a communications interface (34) is provided for interrogating an emergency destination from the external database.

11. Navigation system according to one of the preceding Claims 8 to 10, **characterized in that** the emergency destinations are hospitals, police stations, public telephones, personal protection systems, emergency phone points and/or fire stations.

12. Navigation system according to one of the preceding Claims 8 to 11, **characterized in that** a communications interface (34) is provided, via which a selected emergency destination can be selected for an imminent arrival of the vehicle to be communicated.

## Revendications

1. Procédé de navigation de véhicules automobiles, pour une navigation à partir de l'endroit actuel vers un lieu de destination,
**caractérisé en ce que**
directement sur une demande d'un utilisateur en cas d'urgence, on présente automatiquement différents types de destinations d'urgence à sélectionner par l'utilisateur, et directement après le choix d'un type de destination d'urgence par l'utilisateur, une destination d'urgence du type choisi la plus proche du lieu actuel du véhicule est déterminée à partir d'une base de données et fixée comme lieu à atteindre, et le système de navigation équipant le véhicule calcule une route pour aller du lieu actuel à la destination d'urgence, et on actionne une touche prédéterminée pour effectuer la demande d'utilisateur en cas d'urgence.

2. Procédé de navigation selon la revendication 1,
**caractérisé en ce que**
les destinations d'urgence sont des hôpitaux, des postes de police, des téléphones publics, des installations de protection de personnes, des colonnes d'appel et/ou des casernes de pompiers.

3. Procédé de navigation selon l'une des revendications précédentes,
**caractérisé en ce que**
la touche prédéterminée pour activer la demande d'utilisateur en cas d'urgence, doit être actionnée pendant un temps donné, par exemple trois secondes.

4. Procédé de navigation selon l'une quelconque des revendications précédentes,
**caractérisé en ce que**
par l'intermédiaire d'une interface de communication, une liaison est établie avec la destination d'urgence sélectionnée, informant celle-ci de l'arrivée imminente du véhicule.

5. Procédé de navigation selon la revendication 4,
**caractérisé en ce qu'**
on indique à la destination d'urgence dans quel délai est prévue l'arrivée du véhicule.

6. Procédé de navigation selon la revendication 4 ou 5,
**caractérisé en ce que**
par la liaison de communication, la destination d'urgence établit un diagnostic concernant le véhicule et/ou le conducteur.

7. Procédé de navigation selon l'une des revendications précédentes,
**caractérisé en ce qu'**
une interface de communication établit une liaison avec une base de données externe, à partir de laquelle la destination d'urgence est définie.

8. Système de navigation (100) de véhicules automobiles, pour une navigation de l'endroit actuel vers un lieu de destination, avec une touche (32) pour déclencher une demande d'utilisateur en cas d'urgence, prévu pour proposer au choix de l'utilisateur directement sur sa demande d'urgence différents types de destinations d'urgence à partir d'une base de données de destinations d'urgence, et un dispositif (26) de système de navigation est conçu pour déterminer à partir de la base de données une destination d'urgence la plus proche de la position actuelle du véhicule, immédiatement après le choix d'un type de destination choisi par l'utilisateur, et pour calculer une route conduisant de sa position actuelle à la destination d'urgence du type choisi.

9. Système de navigation (100) selon la revendication 8,
**caractérisé par**
une mémoire (22) dans laquelle est déposée la base de données.

10. Système de navigation (100) selon la revendication 8,
**caractérisé en ce que**
la base de données est déposée dans une mémoire externe, et une interface de communication (34) est prévue pour rechercher une destination d'urgence à partir de la base externe de données.

11. Système de navigation selon l'une quelconque des revendications 8 à 10,
**caractérisé en ce que**
les destinations d'urgence sont des hôpitaux, des postes de police, des téléphones publics, des lieux de protection des personnes, des colonnes d'appel et/ou des casernes de pompiers.

12. Système de navigation selon l'une quelconque des revendications 8 à 11,
**caractérisé en ce qu'**
une interface de communication (34) permet d'appeler une destination d'urgence sélectionnée pour l'informer de l'arrivée imminente du véhicule.
